# EUROPEAN PATENT SPECIFICATION

(11) **EP 2 506 459 B1**
(45) Date of publication and mention of the grant of the patent: **09.10.2013**
(21) Application number: 11290153.3
(22) Date of filing: 29.03.2011
(51) Int. Cl.: H04B 10/50, H04B 10/516, H04B 10/532, H04B 10/54, H04B 10/556

(54) **Alternate polarisation modulation for reduced bit-rates in variable bit-rate systems**
Wechselpolarisierungsmodulation für verringerte Bitraten in Systemen mit variablen Bitraten
Modulation de polarisation alternée pour débits binaires réduits dans des systèmes à débit binaire variable

(43) Date of publication of application: 03.10.2012
(73) Proprietor: Alcatel Lucent, 75007 Paris (FR)
(72) Inventor: Salsi, Massimiliano, 75013 Paris (FR); Charlet, Gabriel, 91620 Nozay (FR)
(74) Representative: Wetzel, Emmanuelle

(56) References cited:
- US-A1- 2002 159 121
- GWANG-HYUN GHO ET AL: "Rate-Adaptive Coding for Optical Fiber Transmission Systems", JOURNAL OF LIGHTWAVE TECHNOLOGY, IEEE SERVICE CENTER, NEW YORK, NY, US, vol. 29, no. 2, 1 January 2011 (2011-01-01), pages 222-233, XP011328215, ISSN: 0733-8724, DOI: 10.1109/JLT.2010.2099208
- MASSIMILIANO SALSI ET AL: "Taking long repeatered submarine systems to 40Gbit/s and beyond", 35TH EUROPEAN CONFERENCE ON OPTICAL COMMUNICATION, 2009. ECOC '09, VIENNA, AUSTRIA, IEEE, PISCATAWAY, NJ, USA, 20 September 2009 (2009-09-20), pages 1-4, XP031546596, ISBN: 978-1-4244-5096-1
- SALSI M ET AL: "Experimental comparison between binary and quadrature phase shift keying at 40Gbit/s in a transmission system using coherent detection", OPTICAL COMMUNICATION (ECOC), 2010 36TH EUROPEAN CONFERENCE AND EXHIBITION ON, IEEE, PISCATAWAY, NJ, USA, 19 September 2010 (2010-09-19), pages 1-3, XP031789762, ISBN: 978-1-4244-8536-9

## Description

The present document relates to optical transmission systems. In particular, the present document relates to an optical transmitter configured to provide differently modulated optical signals at variable bit-rates.

Optical transmission networks may be upgraded to higher transmission rates, e.g. at 100Gb/s. Such 100Gb/s systems are typically based on transponders using optical coherent detection. However, the increased channel bit-rates may pose problems of network efficiency, as the increased transmission rates may not necessarily be required at all times. The maximum reach of signals is inversely proportional to the bit-rate, thus the efficiency of an entire network can be increased if the bit-rate of a transponder is reduced whenever the maximum bit-rate is not needed. In view of this, operators are interested in flexibility and elasticity of the network, in order to be able to adapt the transmission rates of the transmission channels to changing requirements. For this purpose, the transponder should support variable bit-rates.

A coherent detector is a universal detector in the sense that it can detect any possible modulation format. It is therefore proposed to provide variable bit-rate transmitters which are able to work not only at 100 GBit/s but also at lower bit-rates if needed. For example, the bit-rates could be adapted as a function of the required transmission capacity, as a function of the distance that needs to be reached or as a function of the overall quality of the communication channel (e.g. the noise level, the linear impairments, the non linear effects coming from the channel itself or its neighbours). The present document describes a practical implementation of such a variable bit-rate transmitter. It is described how to achieve adaptive bit-rate functionality through modulation format adaptation, symbol rate adaptation and other means. In particular, the document describes a method and system allowing for adaptive bit-rates through modulation format adaptation.

Gwang-Hyun Gho et. al.: "Rate-adaptive coding for optical fiber transmission systems", Journal of Lightwave Technology, vol.29, no.2, 1.01.2011, pages 222-233, describes a PDM-QPSK transmission system. Massimiliano Salsi et. al.: "Taking long repeatering submarine systems to 40Gbit/s and beyond", 35th European Conference on optical communication, 2009, Vienna, Austria, IEEE, pages 1-4, describes optical transmission systems using coherent detection at 40Gbit/s and 100Gbit/s. US2002/159121A1 describes optical transmission systems using MPSK modulation.

According to an aspect, a polarization multiplex division (PDM) - M phase shift keying (MPSK) modulator for an optical transmitter is described. The PDM-MPSK modulator may be configured to generate a pair of sequences of PSK symbols which may be used to generate optical alternate polarization PSK signals. Typically, M is greater 1 and indicates a number of constellation points of the PSK modulation scheme. Typical examples of M are M=2 (BPSK), M=4 (QPSK), M=8 (8-PSK), M=16 (16-PSK), M=32 (32-PSK), M=64 (64-PSK), M=128 (128-PSK) and more generally M=2^{m}, with m=1,...,7 (and possibly more).

The PDM-MPSK modulator may be configured to generate a sequence of first MPSK symbols for a first polarization tributary of an optical signal at time instants (or instants of time) k=1,...,K, K>1 (typically K is a very large number associated with the length of the signal), and a sequence of second MPSK symbols for a second polarization tributary of the optical signal at the time instants k=1,...K. The first and second polarizations of the optical signal are typically orthogonal with respect to one another. The sequences of first and second MPSK symbols are typically independent from one another. In other words, the PDM-MPSK modulator may be configured to assign, at each time instant k, "root square of M" information bits to a symbol of the sequence of first MPSK symbols, and "root square of M" different information bits (typically subsequent information bits) to a symbol of the sequence of second MPSK symbols. Consequently, at each time instant k, a maximum of two times "root square of M" information bits may be encoded. This yields a maximum transmission rate of an optical transmitter comprising the PDM-MPSK modulator.

The PDM-MPSK modulator may comprise a mapping unit. The mapping unit may be configured to insert an interdependence or correlation between corresponding symbols of the pair of sequences. Alternatively or in addition, the mapping unit may be configured to insert an interdependence or correlation between succeeding symbols of the pair of sequences. In particular, the mapping unit may be configured to select appropriate symbols from the MPSK constellation diagram in dependence of a first state at time instant i and a second state at succeeding time instant i+1, wherein i=1,...,K. The mapping unit may be configured to select the symbols in the pair of sequences such that in the first state at time instant i, the symbol from the sequence of first MPSK symbols and the symbol from the sequence of second MPSK symbols have the same phases. Alternatively or in addition, the mapping unit may be configured to select the symbols in the pair of sequences such that in the second state at time instant i+1, the symbol from the sequence of first MPSK symbols and the symbol from the sequence of second MPSK symbols have opposite phases.

The first state and the second state may alternate for succeeding time instants k=1,..,K. In other words, the mapping unit may comprise a state machine which may toggle between the first state and the second state from one time instant to the next time instant, in an alternating manner. As a result of selecting the symbols of the pair of sequences in dependence of alternating first and second states, succeeding pairs of symbols are interrelated in such a manner that a subsequent optical modulator of an optical transmitter can generate optical alternate polarization signals.

As an outcome of the above mentioned selection of the mapping unit, at each time instant k, "root square of M" information bits may be assigned to the MPSK symbol of the sequence of first MPSK symbols. The corresponding symbol of the sequence of second MPSK symbols may be determined in accordance to the above mentioned selection. In particular, in the first state, the corresponding symbol may be selected to be the same MPSK symbol as the MPSK symbol of the sequence of first MPSK symbols. In the second state, the corresponding symbol may be selected to have opposite phase (i.e. a phase shifted by π) compared to the MPSK symbol of the sequence of first MPSK symbols. As such, at each time instant k, one times "root square of M" information bits may be encoded. In other words, the number of information bits which can be encoded per time instant may be halved with respect to the PDM-MPSK modulation case, thereby enabling an optical transmitter to adapt (i.e. to reduce) the transmission rate.

Alternatively or in addition, the PDM-MPSK modulator may be configured to reduce the available constellation points of the MPSK constellation diagram and to thereby adapt the number of encoded information bits. In an embodiment, M is greater than 3, e.g. M=4. The mapping unit may be configured to ensure that the symbols of the sequences of first and second MPSK symbols are L-PSK symbols, with L being smaller than M, e.g. L=2 (BPSK). This may be achieved by assigning, at each time instant k, "root square of L" information bits to one or both symbols for the pair of sequences. As such, the transmission rate may be reduced by a factor "root square of M" / "root square of L".

By way of example, M may be equal to 4, i.e. QPSK. At each time instant k, the modulator may be configured to map two first output bits to a symbol of the sequence of first MPSK symbols, and to map two second output bits to a symbol of the sequence of second MPSK symbols. In other words, the modulator may be configured to provide two independent sequences of QPSK signal, as a basis for PDM-QPSK signal. In yet other words, the modulator may be a modulator used in a PDM-QPSK transmitter. At maximum transmission rate, the two first and second output bits may correspond to different information bits. However, at reduced transmission rate, the two first and second output bits may be determined from a reduced number of information bits, thereby possibly introducing an interrelation or correlation between symbols of the pair of sequences. In particular, at each time instant k, the mapping unit may be configured to determine the two first and second output bits as a function of a single input bit, i.e. as a function of a single information bit.

This may be achieved by ensuring that in the first state, the two first and second output bits correspond to the single input bit; and by ensuring that in the second state, the two first output bits correspond to the single input bit, and the two second output bits correspond to the inverse of the single input bit.

According to a further aspect, an optical PDM-MPSK transmitter, with M>1, is described. The optical transmitter may be configured to transmit an optical alternate polarization PSK signal. The transmitter may comprise a PDM-MPSK modulator according to any of the aspects and features outlined in the present document. The modulator may be configured to generate a sequence of first MPSK symbols for a first polarization of an optical signal and a sequence of second MPSK symbols for a second polarization of the optical signal. In particular, the modulator may be configured to insert interdependencies between symbols of the pair of sequences as outlined in the present document.

The optical transmitter may comprise an optical phase modulator configured to modulate a phase of a first polarization of the optical signal with the sequence of first MPSK symbols, and to modulate a phase of an orthogonal second polarization of the optical signal with the sequence of second MPSK symbols.

The optical PDM-MPSK transmitter may comprise transmission rate selection means configured to select a modulation scheme based on a desired transmission rate. The modulation scheme may be one or more of PDM-LPSK, alternate polarization (APoI) LPSK, and LPSK, with L being smaller or equal to M. In particular, L may be an exponential of two smaller or equal to M, e.g. L=2, 4, 8, 16, 32, 64, 128.

In an embodiment, M=4 (i.e. QPSK). The transmission rate selection means may be configured to select PDM-QPSK for a transmission rate of 100Gb/s, and APoI-BPSK for a transmission rate of 25Gb/s. Upon selection of a transmission rate of 25Gb/s, the PDM-MPSK modulator may be configured to generate sequences of first and second BPSK symbols using the methods and features outlined in the present document. In particular, the BPSK symbols at succeeding time instants may be selected based on an alternating state. As a result, the optical signal generated by the optical phase modulator using the sequences of first and second BPSK symbols may be an optical APol-BPSK signal.

In an embodiment, the transmission rate selection means may be configured to select PDM-BPSK for a transmission rate of 50Gb/s. Upon selection of a transmission rate of 50Gb/s, the transmitter may be configured to generate independent sequences of first and second BPSK symbols. This may be achieved by assigning, at each time instant k, different information bits to the symbols of the pair of sequences. Furthermore, this may be achieved by setting the in-phase and quadrature components of the symbols equal. As such, the optical signal generated by the optical phase modulator using the independent sequences of first and second BPSK symbols may be an optical PDM-BPSK signal.

The optical transmitter may be configured to perform differential encoding. For this purpose, the optical transmitter may be configured to assign one or more information bits to a phase difference of a symbol at a current time instant with regards to the symbol at a previous time instant. By way of example, one or more information bits may be assigned to a phase different of the current symbol at time instant i with regards to the directly preceding symbol at time instant i-1. In case of alternate polarization modulation schemes, it may be beneficial to assign one or more information bits (e.g. "square root of M" information bits) to the phase difference of the symbol at time instant i with regards to the symbol at time instant i-2, i.e. with regards to the symbol having the same polarization.

According to another aspect, an optical transmission network is described. The optical transmission network may comprise an optical transmitter using any combination of the features outlined in the present document. The optical transmitter may be configured to generate a phase modulated polarization division multiplexed optical signal indicative of sequences of first and second symbols. The network may comprise an optical transmission channel, e.g. an optical fiber, configured to transmit the optical signal. Furthermore, the network may comprise an optical receiver configured to determine the sequences of first and second symbols from the received optical signal. The optical receiver may comprise a coherent optical detector.

According to a further aspect a method for generating an alternate polarization PSK signal using a PDM-MPSK modulator is described. As outlined, M may be greater than one, and may indicate a number of constellation points of the PSK modulation scheme. The PDM-MPSK modulator may be configured to generate a sequence of first MPSK symbols for a first polarization of an optical signal at time instants k=1,...,K, K>1, and a sequence of second MPSK symbols for a second polarization of the optical signal at the time instants k=1,...K. The method may comprise, in a first state at time instant i (i=1,...,K), setting the phase of the symbol from the sequence of first MPSK symbols equal to the phase of the symbol from the sequence of second MPSK symbols. Furthermore, the method may comprise, in a second state at the succeeding time instant i+1, setting the phase of the symbol from the sequence of first MPSK symbols opposite to the phase of the symbol from the sequence of second MPSK symbols.

In particular, for all k=1,...,K, the method may alternate between the first state and the second state. Furthermore, the setting steps may be repeated, in order to generate the sequences of first and second MPSK symbols. As outlined above, the above mentioned setting steps and the alternation between the first and second state ensure that corresponding symbols of the sequences of first and second MPSK symbols are correlated in that they are either identical or have opposite phase.

The method may comprise the step of modulating a phase of the first polarization of the optical signal with the sequence of first MPSK symbols. In a similar manner, a phase of the second polarization of the optical signal may be modulated with the sequence of second MPSK symbols. The first and the second polarization may be orthogonal with respect to one another. As a result, an optical alternate polarization MPSK signal may be generated.

The method may comprise the step of setting the inphase and quadrature components of the complex symbols in the sequence of first MPSK symbols equal, thereby generating a sequence of first BPSK symbols. In a similar manner, the method may comprise the step of setting the inphase and quadrature components of the complex symbols in the sequence of second MPSK symbols equal, thereby generating a sequence of second BPSK symbols.

In an embodiment, at each time instant k=1,...,K, the method may proceed in assigning a single information bit to the BPSK symbol at time instant k of the sequence of first BPSK symbols. The corresponding BPSK symbol at time instant k of the sequence of second BPSK symbols may be determined using the setting step of the first or second state. As a result, an alternate polarization BPSK signal may be provided.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 illustrates example representations of alternate polarization signals;
Fig. 2 shows an example block diagram of a mapping unit for the generation of alternate polarization signals;
Fig. 3 illustrates an example subset of PDM-QPSK signals to generate an alternate polarization BPSK signal;
Fig. 4 shows an example representation of BPSK symbols of an alternate polarization BPSK signal; and
Fig. 5 illustrates example measurement results.

As outlined above, the present document addresses the problem of providing a variable bit-rate transponder which allows different bit-rates at e.g. 100Gb/s and lower. A possible implementation of a 100G transponder could provide three different baud-rates:
1. 100G using a PDM-QPSK modulation format (2 bits per symbol/polarization, 2 polarizations);
2. 50G using PDM-BPSK modulation format (1 bit per symbol/polarization, 2 polarizations); and
3. 25G using BPSK modulation format (1 bit per symbol, 1 polarization).

It can be shown that for 50G the use of PDM-BPSK provides a good solution, where the PDM-BPSK modulation format offers certain advantages over the PDM-QPSK modulation format.

On the other hand, it has been observed that the use of single polarization BPSK for 25G transmission has shortcomings from a network perspective. It is desirable to ensure that the overall network performance is not degraded when the bit-rate of a single channel varies adaptively. This means that a power efficient way of adaptively managing the capacity needs of a whole network should be provided.

It has been observed that different modulation formats may interact through nonlinear effects in different ways. Therefore, it cannot be excluded that a channel that changes adaptively its modulation format might affect its neighbors by activating a chain reaction that will force other channels to lower their bit-rates and that will compromise the total capacity of a transmission link.

To the contrary, a suitable adaptive bit-rate method should provide a gain in terms of overall performance of a transmission link when lowering the transported bit-rate. In a WDM environment, cross nonlinear effects should be taken into account, and for this reason, the bit-rate variation of a certain transmission channel should be done without compromising the neighbor channels.

In view of the above, the use of single polarization BPSK for 25G cannot be considered to be optimal. Measurements have shown that the optimal power per channel of the 25G modulation format using BPSK is 3dB lower than the power per channel of the 50G (PDM-BPSK) and 100G (PDM-QPSK) cases. This means that a change in the modulation format would require an update in the settings of all the amplifiers in the respective transmission link for maintaining an optimal working point, otherwise the 25G configuration would have a shorter reach than the 50G configuration. Furthermore, it has been shown that 25G BPSK offers a limited transmission reach gain compared to 50G PDM BPSK.

It is therefore desirable to provide a solution for the transmission of 25G which provides for a longer reach and for higher optical power. At the same time, the solution should be compatible with 100G PDM-QPSK transmitters, so as to provide a simple and cost effective adaption of the transmission rate. In other words, a modulation format working at 1 bit/symbol and using the hardware of a PDM-QPSK modulator should be provided. This modulation format should yield improved noise sensitivity and it should have minimal impact in term of cross- and self- non linear effects.

As will be outlined in the following, Alternate Polarization BPSK (APol-BPSK) has been identified to meet the above requirements. In the case of a transponder with RZ (Return to Zero) - pulse carving capabilities the choice would be Alternate Polarization RZ-BPSK (APol-RZ-BPSK). Typically, APol-modulation formats are generated with a cascaded polarization modulator, which is not available in a typical PDM-QPSK transponder. It is proposed here to generate the APol- modulation format by correctly mapping the bits of the PDM-QPSK modulator. As will be shown, this is an effective solution with no added cost that provides 3dB of increased nonlinear tolerance to the 25G single polarization BPSK configuration.

By using APol-BPSK, a 25G transmission rate can be provided by appropriate mapping within a PDM-QPSK modulator. The use of APol-BPSK yields a 3dB increased nonlinear threshold, which results in an increased reach. Furthermore, the same optimal injected power of the 50G and 100G configurations can be used, so that no further power adjustments are required. In addition, the generated cross-polarization modulation nonlinear effect onto other channels is almost cancelled completely, when using APol-BPSK.

A PDM BPSK transmitter can be derived from a PDM QPSK transmitter by using identical I and Q components along each polarization. Based on this, the encoding of a APol-BPSK signal can be obtained as follows. If it is assumed that no differential encoding/decoding is applied, for odd symbols (in the time dimension), a bit 0 may be encoded as phase 0 along each polarization. A bit 1 may be encoded as phase π along each polarization. As the same phases are encoded along the 2 orthogonal polarizations, the superposition of the two electrical fields produces an electrical field having a single polarization state (at 45° degree of both polarization tributaries).

For even symbols (in the time dimension), the polarization should be rotated by 90° degrees. A possible way to implement this within a PDM-QPSK modulator is to use different phases along each of the polarization tributaries. A bit 0 may be encoded as a phase 0 along the Y axis and as a phase π along the X axis. A bit 1 may be encoded as a phase n along the Y axis and as a phase 0 along the X axis.

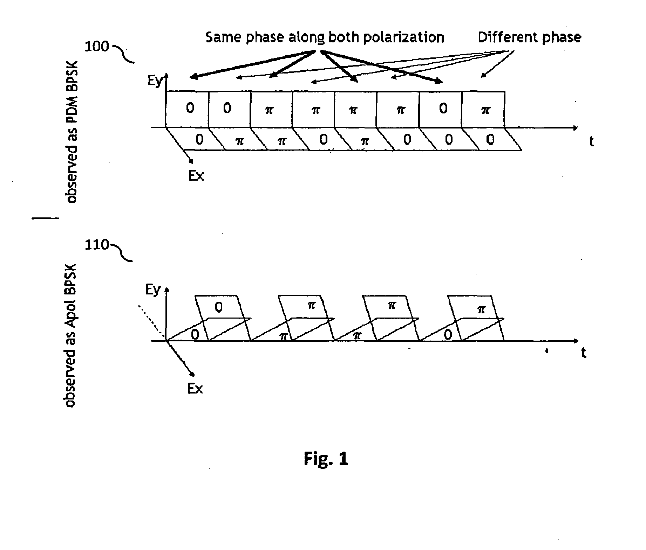

The above phase assignment is illustrated in Fig. 1 which shows two possible representations of the same signal. The upper diagram 100 illustrates a PDM-BPSK signal with correlated phases, i.e. a PDM BPSK signal having the same phases on both polarizations, or having opposed phases on both polarizations. When rotating the diagram 100 by 45° degrees, the lower diagram 110 is obtained which shows that the correlated PDM BPSK signal of diagram 100 corresponds to an APol-BPSK signal.

In the following, the practical implementation in terms of mapping of the bits at the transmitter side will be described. The PDM-QPSK modulator requires four bits per symbol (2 bits for each of the two polarization tributaries). In order to generate an APol-BPSK signal, these four bits per symbol have to be generated from a single bit per symbol in a particular manner which ensures the above mentioned phase relationship. A mapping which allows generating an APol-BPSK signal using a PDM-QPSK modulator is provided in Table 1.

**Table 1**

| (Input bit, Input State) | (0,0) | (1,0) | (0,1) | (1,1) |
|---|---|---|---|---|
| I Pol X | 0 | 1 | 0 | 1 |
| Q Pol X | 0 | 1 | 0 | 1 |
| I Pol Y | 0 | 1 | 1 | 0 |
| Q Pol Y | 0 | 1 | 1 | 0 |
| Output State | 1 | 1 | 0 | 0 |

In Table 1 it is shown that the four output bits are a function of the input bit and of a state. The four output bits correspond to the four PDM-QPSK bits which specify a PDM-QPSK symbol, i.e. which specify the constellation points in the QPSK constellation diagram of the X and the Y polarization tributary. In other words, the output bits are the bits which are responsible for the in-phase and quadrature component of the QPSK signal of each polarization, respectively. In particular, the four output bits determine the in-phase component of the X polarization (I Pol X), the quadrature component of the X polarization (Q Pol X), the in-phase component of the Y polarization (I Pol Y) and the quadrature component of the Y polarization (Q Pol Y).

The state is a single bit memory that is negated at each period, i.e. a single bit which is inverted at each period. In other words, the state takes on the values 1 and 0 in an alternating manner and thereby creates a sequence [1, 0, 1, 0, 1, 0, ...]. As such, the state represents the polarization of the previous symbol and ensures that the polarization of the subsequent symbol is alternate to the polarization of the previous symbol.

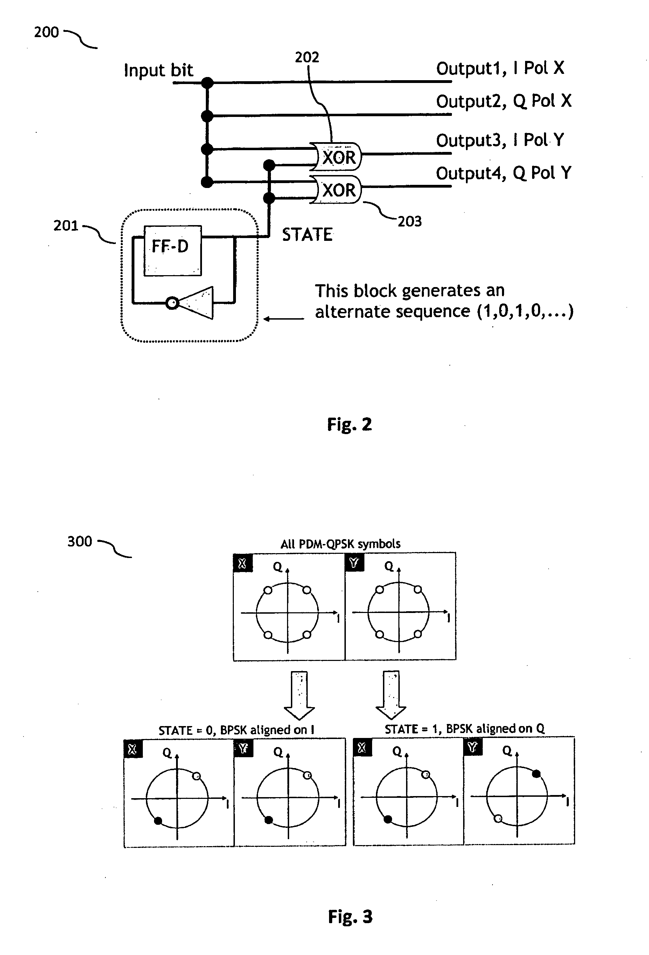

Fig. 2 represents an example logical port scheme 200 which corresponds to the truth table of Table 1. The logical port scheme or mapping unit 200 comprises logical ports such as XOR, NOT and a Flip-Flop D. The mapping unit 200 copies the input bit on the output bits for the X polarization, thereby ensuring that the in-phase and the quadrature component of the X polarization are equal. The logical ports 201, 202, 203 ensure that depending on the state, the output bits for the Y polarization either correspond to the input bit or correspond to the inverse of the input bit. The state is determined by the logical port 201 and provides a sequence of alternating "0" and "1".

This means that the output signal of each independent modulator is a single polarization BPSK single instead of a QPSK signal as it is shown in the diagram 300 of Fig. 3. In particular, it can be seen that if the state = 0, the input bit is exactly copied on all the output bits, so that X and Y polarizations have the same sign. On the other hand, if the state = 1, then the input bit is copied on the output bits of the X polarization and the inverted input bit is copied on the output bits of the Y polarization. In this case, the signs of X and Y polarizations will be opposite. This is shown on the lower part of the diagram 300, where it can be seen that corresponding BPSK symbols on the X and Y polarizations are either identical, in case of state = 0 (indicated by the corresponding dark shaded or lightly shaded dots) or opposite, in case of state = 1. In other words, the possible symbols of a PDM-QPSK signal (top polar diagram in Fig. 3) are reduced to two possible cases, depending on the state variable. If state = 0, then the left diagram holds, if state = 1, then the right diagram holds. The lightly shaded and dark shaded symbols refer to a possible 0/1 input bit.

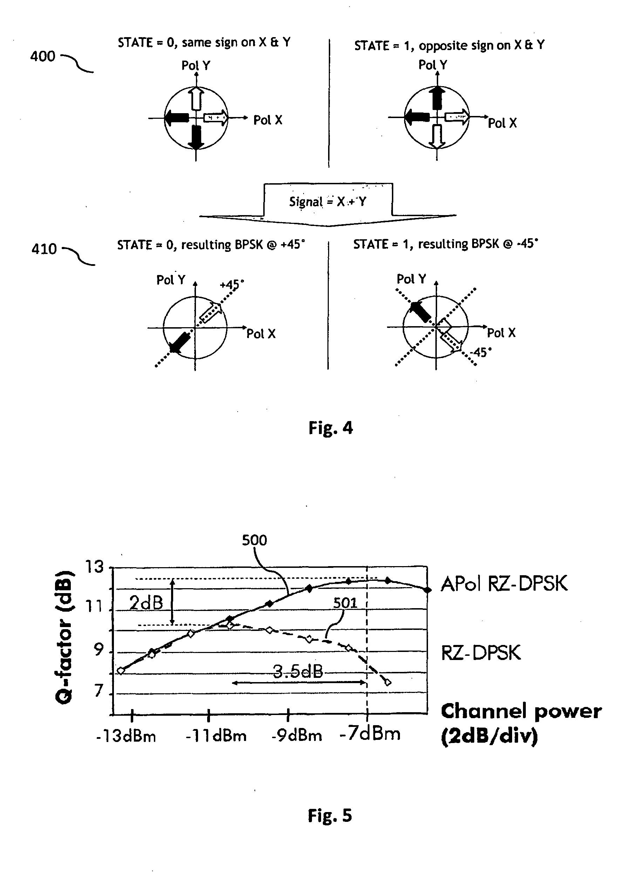

In Fig. 4, the same concept is shown in an alternative diagram. In this representation the BPSK symbols are represented with differently shaded arrows (1= lightly shaded arrow, 0 = dark shaded arrow). The top diagram 400 represents the separate value of the two BPSK symbols generated by the two independent modulators of the transponder. When the state = 0, the two polarizations (X and Y) have the same sign, otherwise they have an opposite sign.

The output signal of the PDM-modulator is the vectorial sum of the two polarizations, which is represented in the bottom diagram 410. When state = 0, the output signal is a BPSK symbol along the +45° axis. When state = 1, the output signal is a BPSK symbol along the -45 ° axis. The lightly shaded/dark shaded arrows are functions of the input bit, however, if the state has an alternating value then the +45° and -45° axes will alternate thereby providing an alternate polarization BPSK modulator. The generated optical signal will have a 90° polarization rotation at each symbol time, which means that the described mapping at the PDM-QPSK modulator provides Alternate- Polarization BPSK.

It should be noted that in a similar manner to the encoding outlined above, differential encoded APol-BPSK signals may be generated using a differential encoded PDM-QPSK modulator. Differential encoded APol-BPSK is obtained by differentially encoding the single input bit that drives the mapping unit 200. As a result an APol-DPSK (Differential PSK) signal, more specifically an APol-DBPSK (Differential BPSK) signal will be obtained.

Furthermore, it should be noted that 2T-Differential encoding may be used. In this case, differential signals are generated separately for each polarization. In other words, the odd bits and the even bits are separately encoded in a differential manner. 2T-Differential encoding may be used in the present case, in order to allow for a simplified post-processing within coherent DSP-based receivers, when using APol-DPSK modulation.

Fig. 5 shows an experimental comparison of 40Gb/s RZ-DPSK (curve 501) versus APol-RZ-DPSK (curve 500). This comparison illustrates the advantages of APol DPSK versus plain DPSK, i.e. a 3dB higher optimum injected power and a 2dB higher Q-factor (a measure of the achievable bit error rate).

In the present document, a variable bit-rate optical transmitter has been described. In particular, methods and systems have been described which allow for the generation of an APol-BPSK signal using a PDM-QPSK modulator. It has been shown that an APol-BPSK signal allows for 25Gb/s transmission rates at improved performances with respect to single polarization BPSK solutions. In particular, a +3dB power per channel threshold provides better performances and a better reach, but also the same output power as the other variable bit-rate configurations (at 100Gb/s and 50Gb/s), thus eliminating the need of a network power adjustment.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A polarization division multiplexing- M phase shift keying, referred to as PDM-MPSK, modulator for an optical transmitter; wherein M>1 indicates a number of constellation points of the PSK modulation scheme; wherein the PDM-MPSK modulator is configured to generate a sequence of first MPSK symbols for a first polarization of an optical signal at time instants k=1,...,K, K>1, and a sequence of second MPSK symbols of a second polarization of the optical signal at the time instants k=1,...K; wherein the PDM-MPSK modulator comprises a mapping unit (200) configured to ensure that
- in a first state at time instant i, the symbol from the sequence of first MPSK symbols and the symbol from the sequence of second MPSK symbols have the same phases; and
- in a second state at succeeding time instant i+1, the symbol from the sequence of first MPSK symbols and the symbol from the sequence of second MPSK symbols have opposite phases; wherein the first state and the second state alternate for succeeding time instants k=1,..,K.

2. The PDM-MPSK modulator of any previous claim, wherein M>3, and
wherein the mapping unit (200) is further configured to ensure that the symbols of the sequences of first and second MPSK symbols are BPSK symbols.

3. The PDM-MPSK modulator of claim 2, wherein
- M=4;
- at each time instant k, the modulator is configured to map two first output bits to a symbol of the sequence of first MPSK symbols, and to map two second output bits to a symbol of the sequence of second MPSK symbols; and
- at each time instant k, the mapping unit is configured to determine the two first and the two second output bits as a function of a single input bit.

4. The PDM-MPSK modulator of claim 3, wherein
- in the first state, the two first and the two second output bits correspond to the single input bit; and
- in the second state, the two first output bits correspond to the single input bit, and the two second output bits correspond to the inverse of the single input bit.

5. An optical PDM-MPSK transmitter, with M>1, the transmitter comprising
- a PDM-MPSK modulator according to any of claims 1 to 4, configured to generate a sequence of first MPSK symbols for a first polarization of an optical signal and a sequence of second MPSK symbols for a second polarization of the optical signal; and
- an optical phase modulator configured to modulate a phase of the first polarization of the optical signal with the sequence of first MPSK symbols, and to modulate a phase of the orthogonal second polarization of the optical signal with the sequence of second MPSK symbols.

6. The optical PDM-MPSK transmitter of claim 5, further comprising
- transmission rate selection means configured to select a modulation scheme based on a desired transmission rate; wherein the modulation scheme is one or more of: PDM-LPSK, a PDM-LPSK modulation scheme according to claim 10, and LPSK; with L being smaller or equal to M.

7. The optical PDM-MPSK transmitter of claim 6, wherein
- M=4;
- the transmission rate selection means are configured to select PDM-QPSK for a transmission rate of 100Gb/s, and alternate polarization BPSK for a transmission rate of 25Gb/s;
- upon selection of a transmission rate of 25Gb/s, the PDM-MPSK modulator is configured to generate sequences of first and second BPSK symbols; and
- the optical signal generated by the optical phase modulator which modulates the phase of the first polarization of the optical signal with the sequence of first BPSK symbols, and which modulates the phase of the orthogonal second polarization of the optical signal with the sequence of second BPSK symbols is an optical alternate polarization BPSK signal.

8. The optical PDM-MPSK transmitter of claim 7, wherein
- the transmission rate selection means are configured to select PDM-BPSK for a transmission rate of 50Gb/s;
- upon selection of a transmission rate of 50Gb/s, the transmitter is configured to generate independent sequences of first and second BPSK symbols; and
- the optical signal generated by the optical phase modulator which modulates the phase of the first polarization of the optical signal with the independent sequence of first BPSK symbols, and which modulates the phase of the orthogonal second polarization of the optical signal with the independent sequence of second BPSK symbols is an optical PDM-BPSK signal.

9. An optical transmission network, comprising
- an optical transmitter according to any of claims 5 to 8 configured to generate a phase modulated polarization division multiplexed optical signal indicative of sequences of first and second symbols;
- an optical transmission channel configured to transmit the optical signal; and
- an optical receiver configured to determine the sequences of first and second symbols from the received optical signal.

10. A method for generating an interdependent PDM-MPSK signal using a PDM-MPSK modulator; wherein M>1 indicates a number of constellation points of the PSK modulation scheme; wherein the PDM-MPSK modulator is configured to generate a sequence of first MPSK symbols for a first polarization of an optical signal at time instants k=1,...,K, K>1, and a sequence of second MPSK symbols of a second polarization of the optical signal at the time instants k=1,...K; the method comprising:
- in a first state at time instant i, setting the phase of the symbol from the sequence of first MPSK symbols equal to the phase of the symbol from the sequence of second MPSK symbols;
- in a second state at the succeeding time instant i+1, setting the phase of the symbol from the sequence of first MPSK symbols opposite to the phase of the symbol from the sequence of second MPSK symbols; and
- alternating between the first state and the second state for all k=1,...,K.

11. The method of claim 10, further comprising for all k=1,...,K,
- repeating the setting steps, thereby generating the sequences of first and second MPSK symbols; wherein corresponding symbols of the sequences of first and second MPSK symbols are correlated in that they are either identical or have opposite phase.

12. The method of any of claims 10 to 11, further comprising
- modulating a phase of the first polarization of the optical signal with the sequence of first MPSK symbols; and
- modulating a phase of the second polarization of the optical signal with the sequence of second MPSK symbols; wherein the first and the second polarization are orthogonal with respect to one another.

13. The method of any of claims 10 to 12, wherein M=4; and wherein the method further comprises
- setting the inphase and quadrature components of the symbols in the sequence of first MPSK symbols equal, thereby generating a sequence of first BPSK symbols; and
- setting the inphase and quadrature components of the symbols in the sequence of second MPSK symbols equal, thereby generating a sequence of second BPSK symbols.

14. The method of claim 13, further comprising at each time instant k=1,...,K,
- assigning a single information bit to the BPSK symbol at time instant k of the sequence of first BPSK symbols; and
- determining the corresponding BPSK symbol at time instant k of the sequence of second BPSK symbols using the setting step of the first or second state.

## Patentansprüche

1. Polarisationsmultiplex-M-Phasenumtastungs- bzw. PDM-MPSK-Modulat für einen optischen Sender; wobei M>1 eine Anzahl von Konstellationspunkten des PSK-Modulationsschemas angibt; wobei der PDM-MPSK-Modulator dafür konfiguriert ist, eine Folge von ersten MPSK-Symbolen für eine erste Polarisation eines optischen Signals zu Zeitpunkten k=1,...,K, K>1, und eine Folge von zweiten MPSK-Symbolen einer zweiten Polarisation des optischen Signals zu den Zeitpunkten k=1,...K zu erzeugen; wobei der PDM-MPSK-Modulator eine Abbildungseinheit (200) umfasst, welche dafür konfiguriert ist, sicherzustellen, dass
- in einem ersten Zustand zum Zeitpunkt i, das Symbol aus der Folge von ersten MPSK-Symbolen und das Symbol aus der Folge von zweiten MPSK-Symbolen dieselbe Phase aufweisen; und
- in einem zweiten Zustand zu dem nachfolgenden Zeitpunkt i+1, das Symbol aus der Folge von ersten MPSK-Symbolen und das Symbol aus der Folge von zweiten MPSK-Symbolen entgegengesetzte Phasen aufweisen, wobei der erste Zustand und der zweite Zustand für nachfolgende Zeitpunkte k=1,...,K alternieren.

2. PDM-MPSK nach einem beliebigen der vorstehenden Ansprüche, wobei M>3 ist, und wobei die Abbildungseinheit (200) weiterhin dafür konfiguriert ist, sicherzustellen, dass die Symbole der Folgen von ersten und zweiten MPSK-Symbolen BPSK-Symbole sind.

3. PDM-MPSK-Modulator nach Anspruch 2, wobei
- M=4;
- zu jedem Zeitpunkt k, der Modulator dafür konfiguriert ist, zwei erste Ausgangsbits auf ein Symbol der Folge von ersten MPSK-Symbolen abzubilden, und zwei zweite Ausgangsbits auf ein Symbol der Folge von zweiten MPSK-Symbolen abzubilden; und
- zu jedem Zeitpunkt k, die Abbildungseinheit dafür konfiguriert ist, die zwei ersten und zweiten Ausgangsbits in Abhängigkeit von einem einzelnen Eingangsbit zu bestimmen.

4. PDM-MPSK-Modulator nach Anspruch 3, wobei
- in dem ersten Zustand, die zwei ersten und zweiten Ausgangsbits dem einzelnen Eingangsbit entsprechen; und
- in dem zweiten Zustand, die zwei ersten Ausgangsbits dem einzelnen Eingangsbit entsprechen, und die zwei zweiten Ausgangsbits dem Kehrwert des einzelnen Eingangsbits entsprechen.

5. Optischer PDM-MPSK-Sender mit M>1, wobei der Sender umfasst:
- Einen PDM-MPSK-Modulator gemäß einem beliebigen der Ansprüche 1 bis 4, dafür konfiguriert, eine Folge von ersten MPSK-Symbolen für eine erste Polarisation eines optischen Signals und eine Folge von zweiten MPSK-Symbolen für eine zweite Polarisation des optischen Signals zu erzeugen; und
- einen optischen Phasenmodulator, dafür konfiguriert, eine Phase der ersten Polarisation des optischen Signals mit der Folge von ersten MPSK-Symbolen zu modulieren, und eine Phase der orthogonalen zweiten Polarisation des optischen Signals mit der Folge von zweiten MPSK-Symbolen zu modulieren.

6. Optischer PDM-MPSK-Sender nach Anspruch 5, weiterhin umfassend:
- Übertragungsraten-Auswahlmittel, dafür konfiguriert, ein Modulationsschema auf der Basis einer gewünschten Übertragungsrate auszuwählen; wobei das Modulationsschema eines oder mehrere von PDM-LPSK, ein PDM-LPSK-Modulationsschema gemäß Anspruch 10, und LPSK ist; wobei L kleiner als oder gleich M ist.

7. Optischer PDM-MPSK-Sender nach Anspruch 6, wobei
- M=4;
- die Übertragungsraten-Auswahlmittel dafür konfiguriert sind, PDM-QPSK für eine Übertragungsrate von 100Gb/s, und BPSK mit alternierender Polarisation für eine Übertragungsrate von 25Gb/s auszuwählen;
- nach Auswählen einer Übertragungsrate von 25Gb/s, der PDM-MPSK-Modulator dafür konfiguriert ist, Folgen von ersten und zweiten BPSK-Symbolen zu erzeugen; und
- das von dem optischen Phasenmodulator, welcher die Phase der ersten Polarisation des optischen Signals mit der Folge von ersten BPSK-Symbolen moduliert, und welcher die Phase der orthogonalen zweiten Polarisation des optischen Signals mit der Folge von zweiten BPSK-Symbolen moduliert, erzeugte optische Signal ein optisches BPSK-Signal mit alternierender Polarisation ist.

8. Optischer PDM-MPSK-Sender nach Anspruch 7 wobei
- die Übertragungsraten-Auswahlmittel dafür konfiguriert sind, PDM-BPSK für eine Übertragungsrate von 50Gb/s auszuwählen;
- nach Auswählen einer Übertragungsrate von 50Gb/s, der Sender dafür konfiguriert ist, unabhängige Folgen von ersten und zweiten BPSK-Symbolen zu erzeugen; und
- das von dem optischen Phasenmodulator, welcher die Phase der ersten Polarisation des optischen Signals mit der unabhängigen Folge von ersten BPSK-Symbolen moduliert, und welcher die Phase der orthogonalen zweiten Polarisation des optischen Signals mit der unabhängigen Folge von zweiten BPSK-Symbolen moduliert, erzeugte optische Signal ein optisches PDM-BPSK-Signal ist.

9. Optisches Übertragungsnetzwerk, umfassend
- Einen optischen Sender gemäß einem beliebigen der Ansprüche 5 bis 8, dafür konfiguriert, ein phasenmoduliertes polarisationsgemultiplextes optisches Signal zu erzeugen, welches für Sequenzen von ersten und zweiten Symbolen indikativ ist;
- einen optischen Übertragungskanal, konfiguriert für die Übertragung des optischen Signals; und
- einen optischen Empfänger, konfiguriert für die Bestimmung der Folgen von ersten und zweiten Symbolen aus dem empfangenen optischen Signal.

10. Verfahren zum Erzeugen eines PSK-Signals mit alternierender Polarisation unter Verwendung eines PDM-MPSK-Modulators; wobei M>1 eine Anzahl von Konstellationspunkten des PSK-Modulationsschemas angibt; wobei der PDM-MPSK-Modulator dafür konfiguriert ist, eine Folge von ersten MPSK-Symbolen für eine erste Polarisation eines optischen Signals zu Zeitpunkten k=1,...,K, K>1, und eine Folge von zweiten MPSK-Symbolen einer zweiten Polarisation des optischen Signals zu den Zeitpunkten k=1,...K zu erzeugen; wobei das Verfahren umfasst:
- in einem ersten Zustand zum Zeitpunkt i, Einstellen der Phase des Symbols aus der Folge von ersten MPSK-Symbolen gleich der Phase des Symbols aus der Folge von zweiten MPSK-Symbolen;
- in einem zweiten Zustand zu dem nachfolgenden Zeitpunkt i+1, Einstellen der Phase des Symbols aus der Folge von ersten MPSK-Symbolen entgegengesetzt zu der Phase des Symbols aus der Folge von zweiten MPSK-Symbolen; und
- Alternieren zwischen dem ersten Zustand und dem zweiten Zustand für alle k=1,...,K.

11. Verfahren nach Anspruch 10, weiterhin umfassend für alle k=1,...,K,
- Wiederholen der Schritte des Einstellens, wodurch die Folgen von ersten und zweiten MPSK-Symbolen erzeugt werden, wobei entsprechende Symbole der Folgen von ersten und zweiten MPSK-Symbolen dadurch korreliert sind, dass sie entweder identisch sind oder entgegengesetzte Phasen aufweisen.

12. Verfahren nach einem beliebigen der Ansprüche 10 bis 11, weiterhin umfassend:
- Modulieren einer Phase der ersten Polarisation des optischen Signals mit der Folge von ersten MPSK-Symbolen; und
- Modulieren einer Phase der zweiten Polarisation des optischen Signals mit der Folge von zweiten MPSK-Symbolen; wobei die erste und die zweite Polarisation im Verhältnis zueinander orthogonal sind.

13. Verfahren nach einem beliebigen der Ansprüche 10 bis 12, wobei M=4; und wobei das Verfahren weiterhin umfasst:
- Einstellen der Inphase- und Quadratur-Komponenten der Symbole in der Folge von ersten MPSK-Symbolen auf denselben Wert, wodurch eine Folge von ersten BPSK-Symbolen erzeugt wird; und
- Einstellen der Inphase- und Quadratur-Komponenten der Symbole in der Folge von zweiten MPSK-Symbolen auf denselben Wert, wodurch eine Folge von zweiten BPSK-Symbolen erzeugt wird.

14. Verfahren nach Anspruch 13, weiterhin umfassend zu jedem Zeitpunkt k=1,...,K,
- Zuordnen eines einzelnen Informationsbits zu dem BPSK-Symbol zum Zeitpunkt k der Folge von ersten BPSK-Symbolen; und
- Bestimmen des entsprechenden BPSK-Symbols zum Zeitpunkt k der Folge von zweiten BPSK-Symbolen unter Verwendung des Schritts des Einstellens des ersten oder des zweiten Zustands.

## Revendications

1. Modulateur à multiplexage par répartition en polarisation - modulation par déplacement de phase M, appelé modulateur PDM-MPSK, pour un émetteur optique ; dans lequel M>1 indique un nombre de points de constellation du schéma de modulation PSK ; dans lequel le modulateur PDM-MPSK est configuré pour générer une séquence de premiers symboles MPSK pour une première polarisation d'un signal optique aux instants k=1,...,K, K>1, et une séquence de deuxièmes symboles MPSK d'une deuxième polarisation du signal optique aux instants k=1,...K ; dans lequel le modulateur PDM-MPSK comprend une unité de mise en correspondance (200) configurée pour s'assurer que
- dans un premier état à l'instant i, le symbole de la séquence de premiers symboles MPSK et le symbole de la séquence de deuxièmes symboles MPSK ont les mêmes phases ; et
- dans un deuxième état à l'instant suivant i+1, le symbole de la séquence de premiers symboles MPSK et le symbole de la séquence de deuxièmes symboles MPSK ont des phases opposées ; le premier état et le deuxième état alternant pour des instants successifs k=1,..,K.

2. Modulateur PDM-MPSK selon une quelconque revendication précédente, dans lequel M>3, et dans lequel l'unité de mise en correspondance (200) est en outre configurée pour s'assurer que les symboles des séquences des premiers et deuxièmes symboles MPSK sont des symboles BPSK.

3. Modulateur PDM-MPSK selon la revendication 2, dans lequel
- M=4 ;
- à chaque instant k, le modulateur est configuré pour mettre en correspondance deux premiers bits de sortie avec un symbole de la séquence de premiers symboles MPSK, et pour mettre en correspondance deux deuxièmes bits de sortie avec un symbole de la séquence de deuxièmes symboles MPSK ; et
- à chaque instant k, l'unité de mise en correspondance est configurée pour déterminer les deux premiers et les deux deuxièmes bits de sortie en fonction d'un seul bit d'entrée.

4. Modulateur PDM-MPSK selon la revendication 3, dans lequel
- dans le premier état, les deux premiers et les deux deuxièmes bits de sortie correspondent au seul bit d'entrée ; et
- dans le deuxième état, les deux premiers bits de sortie correspondent au seul bit d'entrée, et les deux deuxièmes bits de sortie correspondent à l'inverse du seul bit d'entrée.

5. Émetteur PDM-MPSK optique, avec M>1, l'émetteur comprenant
- un modulateur PDM-MPSK selon l'une quelconque des revendications 1 à 4, configuré pour générer une séquence de premiers symboles MPSK pour une première polarisation d'un signal optique et une séquence de deuxièmes symboles MPSK pour une deuxième polarisation du signal optique ; et
- un modulateur de phase optique configuré pour moduler une phase de la première polarisation du signal optique avec la séquence de premiers symboles MPSK, et pour moduler une phase de la deuxième polarisation orthogonale du signal optique avec la séquence de deuxièmes symboles MPSK.

6. Émetteur PDM-MPSK optique selon la revendication 5, comprenant en outre
- des moyens de sélection de débit de transmission configurés pour sélectionner un schéma de modulation sur la base d'un débit de transmission souhaité ; le schéma de modulation étant un ou plusieurs schémas parmi : PDM-LPSK, un schéma de modulation PDM-LPSK selon la revendication 10 et LPSK ; L étant inférieur ou égal à M.

7. Émetteur PDM-MPSK optique selon la revendication 6, dans lequel
- M=4 ;
- les moyens de sélection de débit de transmission sont configurés pour sélectionner un PDM-QPSK pour un débit de transmission de 100 Gb/s, et une BPSK de polarisation alternée pour un débit de transmission de 25 Gb/s ;
- lors de la sélection d'un débit de transmission de 25Gb/s, le modulateur PDM-MPSK est configuré pour générer des séquences de premiers et de deuxièmes symboles BPSK ; et
- le signal optique généré par le modulateur de phase optique qui module la phase de la première polarisation du signal optique avec la séquence de premiers symboles BPSK, et qui module la phase de la deuxième polarisation orthogonale du signal optique avec la séquence de deuxièmes symboles BPSK et un signal BPSK de polarisation alternée optique.

8. Émetteur PDM-MPSK optique selon la revendication 7, dans lequel
- les moyens de sélection de débit de transmission sont configurés pour sélectionner PDM-BPSK pour un débit de transmission de 50 Gb/s ;
- lors de la sélection d'un débit de transmission de 50 Gb/s, l'émetteur est configuré pour générer des séquences indépendantes de premiers et de deuxièmes symboles BPSK; et
- le signal optique généré par le modulateur de phase optique qui module la phase de la première polarisation du signal optique avec la séquence indépendante de premiers symboles BPSK, et qui module la phase de la deuxième polarisation orthogonale du signal optique avec la séquence indépendante de deuxièmes symboles BPSK est un signal PDM-BPSK optique.

9. Réseau de transmission optique, comprenant
- un émetteur optique selon l'une quelconque des revendications 5 à 8 configuré pour générer un signal optique multiplexé par répartition en polarisation modulé en phase indiquant des séquences de premiers et de deuxièmes symboles ;
- un canal de transmission optique configuré pour transmettre le signal optique ; et
- un récepteur optique configuré pour déterminer les séquences de premiers et de deuxièmes symboles à partir du signal optique reçu.

10. Procédé pour générer un signal PDM-MPSK interdépendant utilisant un modulateur PDM-MPSK; dans lequel M>1 indique un nombre de points de constellation du schéma de modulation PSK ; dans lequel le modulateur PDM-MPSK est configuré pour générer une séquence de premiers symboles MPSK pour une première polarisation d'un signal optique aux instants k=1,...,K, K>1, et une séquence de deuxièmes symboles MPSK d'une deuxième polarisation du signal optique aux instants k=1,...K ; le procédé comprenant les étapes suivantes :
- dans un premier état à l'instant i, régler la phase du symbole de la séquence de premiers symboles MPSK de manière égale à la phase du symbole de la séquence de deuxièmes symboles MPSK ; et
- dans un deuxième état à l'instant suivant i+1, régler la phase du symbole de la séquence de premiers symboles MPSK de manière opposée à la phase du symbole de la séquence de deuxièmes symboles MPSK ;
- alterner entre le premier état et le deuxième état pour tous les instants k=1,...,K.

11. Procédé selon la revendication 10, comprenant en outre pour tous les instants k=1,...,K,
- la répétition des étapes de réglage, générant ainsi les séquences de premiers et deuxièmes symboles MPSK ; dans lequel des symboles correspondants des séquences de premiers et deuxièmes symboles MPSK sont mis en corrélation dans la mesure où ils sont identiques ou en ce qu'ils présentent des phases opposées.

12. Procédé selon l'une quelconque des revendications 10 à 11, comprenant en outre les étapes suivantes :
- moduler une phase de la première polarisation du signal optique avec la séquence de premiers symboles MPSK ; et
- moduler une phase de la deuxième polarisation du signal optique avec la séquence de deuxièmes symboles MPSK ; dans lequel la première et la deuxième polarisations sont orthogonales entre elles.

13. Procédé selon l'une quelconque des revendications 10 à 12, dans lequel M=4 ; et dans lequel le procédé comprend en outre les étapes suivantes
- régler les composants en phase et de quadrature des symboles dans la séquence de premiers symboles MPSK de manière égale, générant ainsi une séquence de premiers symboles BPSK ; et
- régler les composants en phase et de quadrature des symboles dans la séquence de deuxièmes symboles MPSK de manière égale, générant ainsi une séquence de deuxièmes symboles BPSK.

14. Procédé selon la revendication 13, comprenant en outre à chaque instant k=1,...,K, les étapes suivantes
- attribuer un seul bit d'information au symbole BPSK à l'instant k de la séquence de premiers symboles BPSK ; et
- déterminer le symbole BPSK correspondant à l'instant k de la séquence de deuxièmes symboles BPSK en utilisant l'étape de réglage du premier ou du deuxième état.
